# EUROPÄISCHE PATENTSCHRIFT

(11) **EP 2 263 062 B1**
(45) Veröffentlichungstag und Bekanntmachung des Hinweises auf die Patenterteilung: **10.06.2015**
(21) Anmeldenummer: 09730491.9
(22) Anmeldetag: 09.04.2009
(51) Int. Cl.: G01B 11/02, G01B 11/255, G01M 11/02

(54) **VORRICHTUNG UND VERFAHREN ZUR TOPOGRAPHISCHEN VERMESSUNG VON OBERFLÄCHEN VON GEGENSTÄNDEN**
DEVICE AND METHOD FOR MEASURING THE TOPOGRAPHY OF SURFACES OF ARTICLES
DISPOSITIF ET PROCÉDÉ DE MESURE TOPOGRAPHIQUE DE SURFACES D'OBJETS

(30) Priorität: 10.04.2008 DE 102008018143
(43) Veröffentlichungstag der Anmeldung: 22.12.2010
(73) Patentinhaber: Trioptics GmbH, 22880 Wedel (DE)
(72) Erfinder: RUPRECHT, Aiko, 22880 Wedel (DE)
(74) Vertreter: Schwanhäußer, Gernot
(86) Internationale Anmeldenummer: PCT/EP2009/002643
(87) Internationale Veröffentlichungsnummer: WO 2009/124767

(56) Entgegenhaltungen:
- EP-A1- 1 519 144
- WO-A2-2006/082368
- DE-A1- 19 854 942
- US-A- 4 886 362

## Beschreibung

### HINTERGRUND DER ERFINDUNG

### 1. Gebiet der Erfindung

Die Erfindung betrifft eine Vorrichtung und ein Verfahren zur Vermessung von gekrümmten rotationssymmetrischen Oberflächen von Gegenständen, insbesondere von Linsen.

### 2. Beschreibung des Standes der Technik

Auf vielen Gebieten der Technik besteht häufig die Aufgabe, die Topographie von gekrümmten Flächen von Gegenständen mit hoher Genauigkeit zu messen. Unter der Topografie einer Oberfläche wird im Allgemeinen die Form der Oberfläche verstanden. Meist wird die Topographie durch die Raumkoordinaten einer möglichst großen Zahl von Punkten auf der Oberfläche beschrieben.

Wichtig ist die topographische Vermessung von Oberflächen insbesondere im Bereich der Optik. Bei der Fertigung von Linsen etwa wird eine topographische Vermessung häufig im Rahmen der Qualitätssicherung durchgeführt. Auch die gekrümmten Oberflächen von stempelartigen Werkzeugen, die gelegentlich zur Herstellung von Linsen eingesetzt werden, werden durch topographische Vermessung auf Maßhaltigkeit überprüft.

Die bislang bekannten Verfahren zum Vermessen von derartigen Oberflächen lassen sich in zwei Kategorien unterteilen:
Eine erste Kategorie bilden flächig messende Verfahren, bei denen sich der gesamte zu vermessende Gegenstand (Prüfling) innerhalb eines Messfelds befindet. Dazu zählen z. B. interferometrische Verfahren, bei denen die Form des Prüflings mit der Form einer Referenzwellenfront verglichen wird.

Eine zweite Kategorie bilden Messverfahren, bei denen der Prüfling größer als das Messfeld der Messvorrichtung ist. Die vollständige Form der Oberfläche wird ermittelt, indem der Prüfling relativ zu der Messvorrichtung verfahren wird.

Die Verfahrbewegung kann dabei derart erfolgen, dass der Prüfling relativ zu der Messvorrichtung in einer Ebene verfahren wird. Die Messvorrichtung weist zu diesem Zweck einen Abstandssensor auf, dessen Messrichtung senkrecht zu der Bewegungsebene steht. Die Symmetrieachse der zu prüfenden Oberfläche verläuft bei diesem bekannten Aufbau parallel zur Messrichtung des Abstandssensors. Von einem solchen Messaufbau machen beispielsweise die Produkte "Micromeasure" der Firma Stil Gebrauch.

Bekannt ist ferner, den Prüfling während der Messung um seine Symmetrieachse rotieren zu lassen und den Abstandssensor entlang einer kreisbogenförmigen Bahn um den Prüfling herumzuschwenken. Die Rotationsachse des Prüflings und die Schwenkachse, um welche der Abstandssensor um den Prüfling verschwenkt wird, stehen dabei senkrecht aufeinander. Nähere Einzelheiten hierzu können einem Aufsatz unter Optifab: Technical Digest, SPIE Technical Digest TD04-24 (2007) entnommen werden.

Insbesondere bei der punktweisen topographischen Vermessung von Oberflächen kommt eine Vielzahl unterschiedlicher Abstandssensoren zum Einsatz. Beispiele hierfür sind taktile Messtaster, optische Triangulationssensoren, Autofokussensoren, interferometrische Abstandssensoren, deflektometrische Sensoren und konfokale Sensoren. Die Form des Prüflings, oder genauer gesagt der Abstand zum Prüfling, wird dabei entweder direkt oder indirekt gemessen. Ein Beispiel für eine indirekte Messung über die lokale Oberflächensteigung oder Oberflächenkrümmung ist der DE 198 54 942 C2 entnehmbar.

Derartige Topografiesensoren sind bezüglich des Messbereichs (bei direkter Messung) oder der messbaren Oberflächensteigung (bei indirekter Messung) begrenzt. Mit den vorstehend beschriebenen Verfahrbewegungen zwischen dem Prüfling und dem Topografiesensor ist es nur begrenzt möglich, die Topografie größerer Prüflinge mit der erforderlichen Genauigkeit zu messen.

Aus der WO 2006/082368 A2 ist eine Vorrichtung zur topographischen Vermessung von Oberflächen bekannt, die einen taktilen Messtaster verwendet. Der Messtaster umfasst einen Messstift, der rechtwinklig von einem schwenkbar gelagerten Messarm absteht. Wenn der Messarm mit dem daran befestigten Messstift entlang einer geradlinigen Bahn bewegt wird, während der Messstift auf dem Prüfling aufliegt, so wird der Messarm entsprechend dem Oberflächenprofil des Prüflings ausgelenkt. Aus der mit hoher Genauigkeit erfassten Auslenkung wird auf das Oberflächenprofil des Prüflings zurückgeschlossen.

Der Winkel zwischen dem Messstift und der Oberfläche des Prüflings darf bei dieser taktilen Messung nicht zu groß werden. Um den zulässigen Winkelbereich einhalten zu können, lässt sich bei der bekannten Vorrichtung der Prüfling um eine senkrecht zum Messstift verlaufende Achse verschwenken. Auf diese Weise lassen sich Abschnitte der Oberfläche so zustellen, dass die Winkel klein genug bleiben. Die Messungen, die für jeden einzelnen Abschnitt erhalten wurden, werden rechnerisch so verknüpft, dass sich z.B. das vollständige Profil eines Linsendurchmessers bestimmen lässt.

Bei der bekannten Vorrichtung ist ferner ein Träger für den Prüfling drehbar angeordnet. Auf diese Weise können für unterschiedliche Azimutwinkel vollständige Durchmesser gemessen werden.

Vor Beginn der eigentlichen Messung wird der als rotationssymmetrisch angenommen Prüfling so auf dem Träger ausgerichtet, dass der Scheitelpunkt des Prüflings, durch den bei optischen Elementen deren optische Achse verläuft, auf der Drehachse des Trägers zu liegen kommt. Die ungefähre Lage des Scheitelpunkts wird mit Hilfe des Messstifts ermittelt.

### ZUSAMMENFASSUNG DER ERFINDUNG

Aufgabe der vorliegenden Erfindung ist es, eine Vorrichtung sowie ein Verfahren der eingangs genannten Art derart zu verbessern, dass die Oberflächentopografie mit verbesserter Genauigkeit gemessen werden kann.

Gelöst wird diese Aufgabe durch eine Vorrichtung zur topographischen Vermessung von gekrümmten rotationssymmetrischen Oberflächen von Gegenständen, insbesondere von Linsen wie im unabhängigen Anspruch 1 definiert. Die Vorrichtung weist dabei eine Dreheinrichtung zur Drehung des Gegenstands um eine Drehachse und einen Topographiesensor auf, mit dem topographische Daten eines Punktes, einer Linie oder eines Flächenelements auf der Oberfläche messbar sind. Der Topographiesensor, bei dem es sich beispielsweise um einen Abstandssensor oder einen Winkelsensor handeln kann, und die Oberfläche sind relativ zueinander in einer Verfahrebene verfahrbar. Die Verfahrebene ist zu der Drehachse in einem Winkel ungleich 90°, vorzugsweise in einem Winkel kleiner 80°, angeordnet. Erfindungsgemäß weist die Vorrichtung ferner einen Autokollimator auf, der zur Messung der Lage einer Symmetrieachse der rotationssymmetrischen Oberfläche eingerichtet ist.

Mit dem Autokollimator kann die Lage der optischen Achse so genau bestimmt werden, dass diese als Bezugsgröße für die gemessenen topographischen Daten verwendet werden kann. Eine solche Bezugsgröße ist in der Regel erforderlich, um die gemessene Topographie mit einem raumfesten Punkt des Gegenstands zu verknüpfen. Bislang werden als Referenzgrößen meist Punkte am Rand des Gegenstands gewählt. Derartige Punkte lassen sich häufig jedoch nicht gut mit der gewünschten Genauigkeit messen, z.B. weil der Rand außerhalb eines Messbereichs des Topographiesensors liegt oder eine andere Symmetrie hat.

Vor allem jedoch ist es mit Hilfe des Autokollimators möglich, die Symmetrieachse auch während der Topographiemessung kontinuierlich oder intermittierend zu messen. Auf diese Weise ist es möglich, systematischen Fehlern Rechnung zu tragen, die beispielsweise durch eine nicht perfekte Rotationssymmetrie des Gegenstands oder aus durch den Messaufbau verursachte Unwuchten bei einer Drehung des Gegenstands während des Messvorgangs resultieren können.

Ist die genaue Lage der Symmetrieachse bekannt, so besteht außerdem die Möglichkeit, nicht ganze, sondern nur halbe Diagonalschnitte durch die Oberfläche zu messen. Die andere Hälfte des Diagonalschnitts wird dann durch rechnerische Spiegelung des gemessenen halben Diagonalschnitts an der Symmetrieachse ermittelt. Auf diese Weise kann bei rotationssymmetrischen oder spiegelsymmetrischen Gegenständen die Messzeit annähernd um einen Faktor 2 reduziert werden im Vergleich zu den bekannten Messvorrichtungen, bei denen die Lage der Symmetrieachse nur ungefähr bekannt ist.

Die Vorrichtung weist dabei eine Dreheinrichtung auf, mit der optische Elemente mit rotationssymmetrischen Oberflächen um ihre Symmetrieachse gedreht werden können. Damit lassen sich mehrere halbe Diagonalschnitte in unterschiedlichen Azimutwinkeln messen.

Eine solche Dreheinrichtung ermöglicht ferner einen Messmodus, bei dem bei der topographischen Vermessung zwischen einzelnen Messpunkten der Gegenstand um seine Symmetrieachse verdreht und der Topographiesensor in der Verfahrebene linear verfahren wird. Bei geeigneter Überlagerung dieser beiden Bewegungen sind die Messpunkte auf einer spiralförmigen Bahn um die Symmetrieachse herum angeordnet, wenn man die Messpunkte auf einer zu der Symmetrieachse senkrechte Ebene projiziert. Auf diese Weise lässt sich mit wenigen Verfahrbewegungen und damit sehr schnell die gesamte Oberfläche topographisch vermessen.

Hinsichtlich des Verfahrens wird die Aufgabe gelöst durch ein Verfahren zur topographischen Vermessung von gekrümmten rotationssymmetrischen oder zylindrischen Oberflächen von Gegenständen, insbesondere von Linsen, wie im unabhängigen Anspruch 5 definiert. Dabei misst ein Topographiesensor topographische Daten eines Punktes, einer Linie oder eines Flächenelements auf der Oberfläche . Der Topographiesensor, bei dem es sich beispielsweise um einen Abstandssensor oder einen Winkelsensor handeln kann, und die Oberfläche werden dabei relativ zueinander in einer Verfahrebene verfahren. Die Verfahrebene ist dabei zu einer Drehachse, um die der Gegenstand gedreht wird, in einem Winkel ungleich 90°, vorzugsweise in einem Winkel kleiner als 80° angeordnet. Erfindungsgemäß werden weiter folgende Schritte durchgeführt:
a) Bestimmung der Lage der Symmetrieachse der rotationssymmetrischen Oberfläche mit einem Autokollimator oder mit dem Topographiesensor;
b) Messung eines halben Diagonalschnitts durch die Oberfläche;
c) Berechnen der anderen Hälfte des Diagonalschnitts durch rechnerische Spiegelung des in Schritt b) gemessenen halben Diagonalschnitts an der Symmetrieachse.

Wie vorstehend bereits erläutert wurde, kann auf diese Weise die Zahl der erforderlichen Einzelmessungen und damit die Messzeit annähernd um einen Faktor 2 reduziert werden.

Die Messung der Lage der Symmetrieachse kann dabei entweder durch Auswertung der von dem Topografiesensor ermittelten topographischen Daten oder auch mit dem Autokollimator gemessen werden.

Sind Abweichungen von den idealen Symmetrieeigenschaften bekannt oder vermutet, so genügt es im Allgemeinen nicht, nur einen halben Diagonalschnitt zu messen. In diesem Falle sollten mehrere Teilmessungen von unterschiedlichen Bereichen auf der Oberfläche miteinander verknüpft werden. Bei diesen Teilmessungen kann es sich z. B. um eine Vielzahl von halben Diagonalschnitten in unterschiedlichen Drehstellungen einer rotationssymmetrischen Oberfläche handeln.

### KURZE BESCHREIBUNG DER ZEICHUNGEN

Weitere Merkmale und Vorteile der Erfindung ergeben sich aus der nachfolgenden Beschreibung eines Ausführungsbeispiels anhand der Zeichnungen. Darin zeigen:
- Figur 1: eine schematische Darstellung einer bekannten Messvorrichtung, bei der eine Symmetrieachse einer rotationssymmetrischen zu vermessenden Oberfläche parallel zu einer Messrichtung eines Abstandssensors verläuft;
- Figur 2: eine schematische Darstellung einer anderen bekannten Messvorrichtung, bei der eine rotationssymmetrische Fläche um ihre Symmetrieachse rotiert wird, während ein Abstandssensor um eine orthogonale Schwenkachse um den Prüfling herumgeschwenkt wird;
- Figur 3: eine schematische Darstellung einer Messvorrichtung, bei der ein Abstandssensor relativ zu dem Prüfling in einer Verfahrebene verfahren wird, die zu einer Symmetrieachse eines rotationssymmetrischen Prüflings einen Winkel einschließt;
- Figur 4a: einen Graphen, in denen gemessene Abstandswerte über einer Verfahrkoordinate x aufgetragen sind;
- Figur 4b: einen dem Graphen der Figur 4a entsprechenden Graphen nach Herausrechnen der Verkippung der Messrichtung relativ zu der Rotationsachse;
- Figur 5: eine an die Figur 3 angelehnte Darstellung einer Messvorrichtung gemäß einem Ausführungsbeispiel der Erfindung, bei welcher der Prüfling um seine Symmetrieachse drehbar angeordnet ist und welche zusätzlich einen Autokollimator enthält.

### BESCHREIBUNG BEVORZUGTER AUSFÜHRUNGSBEISPIELE

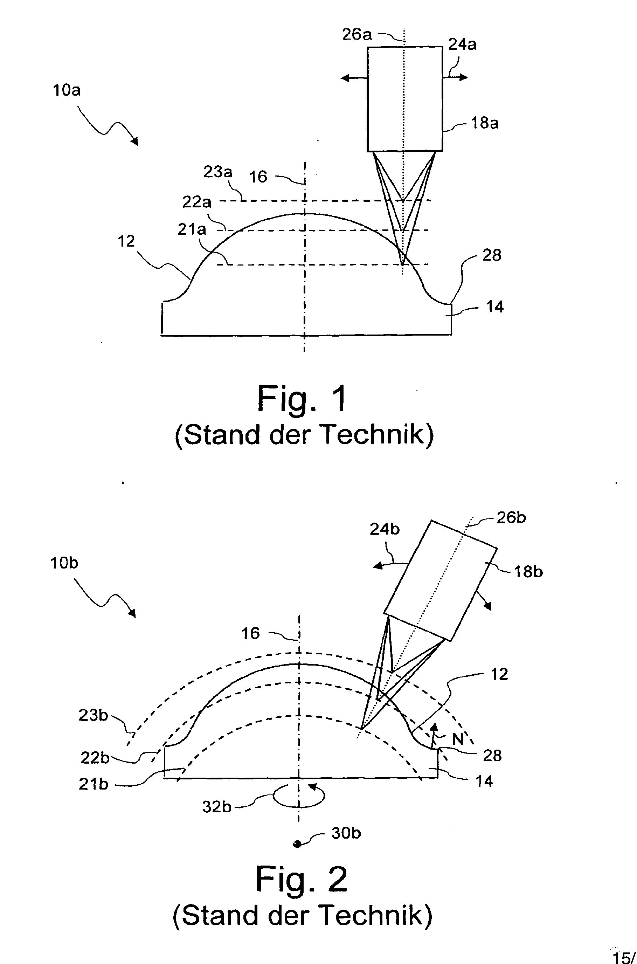

Die Figur 1 zeigt in einer schematischen Darstellung eine aus dem Stand der Technik bekannte Messvorrichtung 10a, mit der die Topografie einer Oberfläche 12 eines Prüflings 14 vermessen werden kann. Bei dem Prüfling 14 handelt es sich bei dem dargestellten Beispiel um eine asphärische Linse, die bezüglich einer Symmetrieachse 16 rotationssymmetrisch ist.

Zur Bestimmung der Topografie der Oberfläche 12 weist die Vorrichtung 10a einen Abstandssensor 18a auf, mit welcher der Abstand zwischen Messpunkten auf der Oberfläche 12 und einem bezüglich des Abstandssensors 18a ortsfesten Bezugspunkt ermittelbar ist. In dem dargestellten Beispiel ist der Abstandssensor 18a als chromatisch konfokaler Abstandssensor ausgebildet. Ein solcher Sensor enthält eine chromatische Lichtquelle, z. B. eine Halogenoder Xenonlampe. Das Licht der Lichtquelle wird über eine Glasfaser einem Messkopf zugeführt. Der Messkopf enthält ein Objektiv mit starker chromatischer Aberration, welches das objektseitige Ende der Glasfaser in kurzer Entfernung verkleinert abbildet. Infolge der chromatischen Aberration ergibt sich eine wellenlängenabhängige Brennweite für diese Abbildung. In der Figur 1 ist für drei unterschiedliche Wellenlängen der Brennpunkt durch konvergierende Strahlenbündel angedeutet. Die Brennebenen für diese drei Wellenlängen sind mit 21a, 22a, 23a bezeichnet.

Befindet sich eine optische Grenzfläche in dem Brennweitenbereich des Objektivs des Abstandssensors 18a, so erzeugt aufgrund der wellenlängenabhängigen Brennweite des Objektivs nur Licht einer ganz bestimmten Wellenlänge einen scharfen Brennpunkt dieser Grenzfläche. Umgekehrt wird nur der Reflex des Lichts dieser Wellenlänge wieder scharf auf das Faserende abgebildet und in die Faser eingekoppelt. Am geräteseitigen Ende der Faser wird das zurücklaufende Licht ausgekoppelt und in einem Spektrographen analysiert. Jedes lokale Maximum der spektralen Intensitätsverteilung entspricht einer rückstreuenden optischen Grenzfläche. Wird der Reflex durch die dem Messkopf am nächsten liegende Grenzfläche ausgewertet, so lässt sich daraus der Abstand zwischen dem Messkopf und der Grenzfläche ableiten.

Wie durch Pfeile 24a angedeutet, ist der Abstandssensor 18a in einer Verfahrebene relativ zu dem Prüfling 14 verfahrbar angeordnet. Auf diese Weise kann durch Verfahren des Abstandssensors 18a gegenüber dem Prüfling 14 (oder umgekehrt Verfahren des Prüflings 14 gegenüber dem feststehenden Abstandssensor 18a) ein Diagonalschnitt durch die Oberfläche 12 gemessen werden. Eine Messrichtung 26a des Abstandssensors 18a ist dabei im Wesentlichen parallel zur Symmetrieachse 16 der Oberfläche 12 ausgerichtet. Sofern die Oberfläche 12 vollkommen rotationssymmetrisch bezüglich der Symmetrieachse 16 ist, genügt auch die Messung eines halben Diagonalschnitts, d. h. des Bereichs zwischen der Symmetrieachse 16 und einem Außenrand 28 der Oberfläche 12.

Da der Messbereich des Abstandssensors 18a begrenzt ist, können nicht beliebig große Oberflächen 12 vermessen werden. Wäre der Messbereich beispielsweise durch die beiden äußeren Brennebenen 21a und 23a begrenzt, so könnte die in der Figur 1 gezeigte Oberfläche 12 nicht bis zu ihrem Außenrand 28 vermessen werden.

Um hier Abhilfe zu schaffen, ist im Stand der Technik die in der Figur 2 gezeigte Anordnung vorgeschlagen worden. Die dort mit 10b bezeichnete Messvorrichtung unterscheidet sich von der in der Figur 1 gezeigten Messvorrichtung 10a vor allem dadurch, dass der Abstandssensor 18b nicht in einer Verfahrebene verfahrbar angeordnet ist, sondern um eine Schwenkachse 30b verschwenkbar ist, die senkrecht zur Symmetrieachse 16 der Oberfläche 12 steht. Die Verschwenkbarkeit ist in der Figur 2 durch Pfeile 24b angedeutet. Infolge der Verschwenkbarkeit des Abstandssensors 18b kann man sich die Brennebenen 21b, 22b, 23b als sphärisch gekrümmte Flächen vorstellen, wie dies in der Figur 2 durch gestrichelte Linien angedeutet ist. Durch diese Verschwenkbarkeit kann der Abstandssensor 18a der konvex gekrümmten Oberfläche 12 gewissermaßen nachgeführt werden, so dass auch für größere Oberflächen 12 topografische Daten ermittelt werden können. Zusätzlich kann der Prüfling 14 um die Symmetrieachse 16 gedreht werden, wie dies in der Figur 2 durch einen Pfeil 32b angedeutet ist.

In der Figur 2 ist erkennbar, dass in der Nähe des Außenrands 28 die Oberflächennormalen (eine davon ist in der Figur 2 mit einem Pfeil N angedeutet) einen großen Winkel zur der dort vorliegenden Messrichtung 26b einschließen. Dadurch können dort die topographischen Daten nicht oder nicht mit der erforderlichen Genauigkeit ermittelt werden.

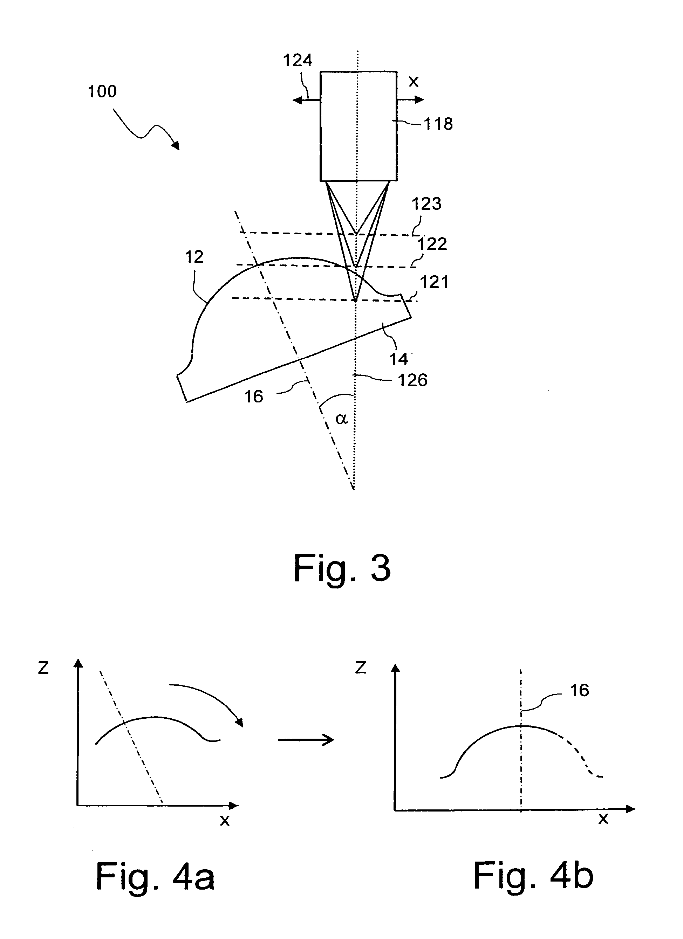

Die Figur 3 zeigt eine insgesamt mit 100 bezeichnete Messvorrichtung. Die Messvorrichtung 100 unterscheidet sich von der in der Figur 1 gezeigten Messvorrichtung 10a dadurch, dass die durch Pfeile 124 angedeutete Verfahrebene des Abstandssensors 118 in einem Winkel 90°- α ≠ 90° zur Symmetrieachse 16 der Oberfläche 12 angeordnet ist. Die Messrichtung 126 verläuft somit nicht parallel zur Symmetrieachse 16, sondern schließt mit dieser den Winkel α > 0° ein. Vorzugsweise ist der Winkel α > 10°, wodurch der Winkel zwischen der Verfahrebene 124 und der Symmetrieachse 16 kleiner als 80° wird.

Durch die geneigte Anordnung der Messrichtung 126 und der Symmetrieachse 16 der Oberfläche 12 ist es möglich, auch bei größeren Oberflächen 12 einen halben Diagonalschnitt zu messen, wie er in dem Graphen der Figur 4a angedeutet ist, in dem der Abstand Z über der Verfahrkoordinate x aufgetragen ist. Wenn die Lage der Symmetrieachse 16 bekannt ist, kann durch rechnerisches Spiegeln der Messwerte an der Symmetrieachse 16 die Topografie eines ganzen Diagonalschnitts ermittelt werden, wie dies in der Figur 4b gezeigt ist.

Durch die geneigte Anordnung der Messrichtung 26 bezüglich der Symmetrieachse 16 lassen sich ferner stärkere Krümmungen im Bereich des Rands 28 der Oberfläche 12 messen, da die Oberflächennormale nun einen kleineren Winkel zur Messrichtung 126 einschließt.

Um die Symmetrieachse 16 zu bestimmen, kann der Prüfling z. B. zuvor mit einer anderen Messeinrichtung vermessen werden, mit der sich die Symmetrieachse auch asphärisch geformter Oberflächen mit hoher Genauigkeit bestimmen lässt. Werden mehrere halbe Diagonalschnitte in unterschiedlichen Drehstellungen des Prüflings 12 gemessen, so lässt sich aber auch mit der in der Figur 3 gezeigten erfindungsgemäßen Messvorrichtung 100 die Lage der Symmetrieachse 16 durch Auswertung der gewonnenen topografischen Daten bestimmen.

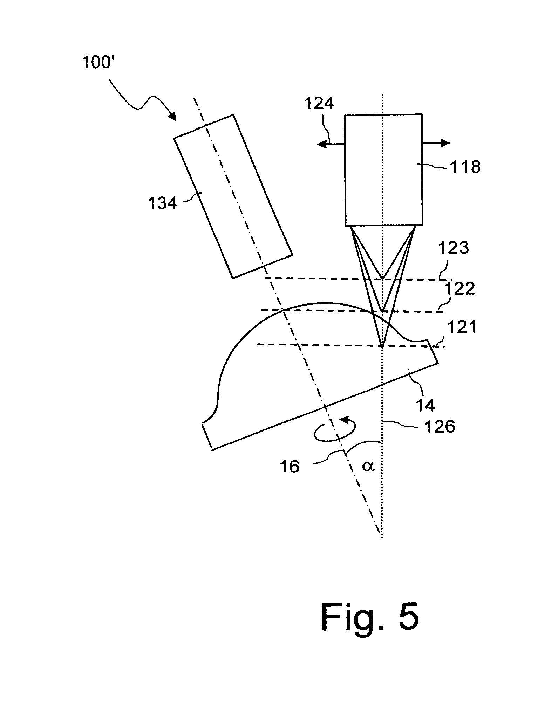

Die Figur 5 zeigt ein Ausführungsbeispiel für eine erfindungsgemäße Messvorrichtung, die insgesamt mit 100' bezeichnet ist. Die Messvorrichtung 100' unterscheidet sich von der in der Figur 3 gezeigten Messvorrichtung 100 lediglich dadurch, dass zur Bestimmung der Lage der Symmetrieachse 16 zusätzlich ein Zentrierungssensor 134' vorgesehen ist, der als Autokollimator ausgebildet ist. Mit einem solchen Autokollimator ist es möglich, die Symmetrieachse bezüglich des sphärischen Anteils der Oberfläche 12 zu bestimmen. Dabei wird die Tatsache ausgenutzt, dass dann, wenn die Messrichtung des Zentrierungssensors 134 nicht exakt mit der Symmetrieachse 16 übereinstimmt, der Scheitelbereich der Oberfläche 12 eine Taumelbewegung durchführt, wenn der Prüfling 14 um eine Drehachse gedreht wird. Diese Taumelbewegung lässt sich mit Hilfe eines Autokollimators vermessen. Weitere Einzelheiten hierzu können beispielsweise der internationalen Anmeldung PCT/EP2007/009291 (nach dem Prioritätsdatum der vorliegenden Anmeldung veröffentlicht als WO 2008/052701) der Anmelderin entnommen werden. Zur Drehung des Prüflings 12 wird eine (nicht näher dargestellte) Dreheinrichtung, z. B. ein Drehtisch, verwendet.

## Patentansprüche

1. Vorrichtung zur topographischen Vermessung von gekrümmten rotationssymmetrischen Oberflächen (12) von Gegenständen (14), insbesondere von Linsen, mit einem Topografiesensor (118), mit dem topografische Daten eines Punktes, einer Linie oder eines Flächenelements auf der Oberfläche (12) meßbar sind, wobei der Topografiesensor (118) und die Oberfläche (12) relativ zueinander in einer Verfahrebene (124) verfahrbar sind, und mit einer Dreheinrichtung, die dazu eingerichtet ist, den Gegenstand um eine Drehachse zu drehen, und wobei die Verfahrebene (124) zu der Drehachse in einem Winkel ungleich 90°, vorzugsweise in einem Winkel kleiner als 80°, angeordnet ist,
**dadurch gekennzeichnet, dass** die Vorrichtung
einen Autokollimator (134) aufweist, der zur Messung der Lage einer Symmetrieachse (16) der rotationssymmetrischen Oberfläche eingerichtet ist.

2. Vorrichtung nach Anspruch 1, **dadurch gekennzeichnet, dass** der Topografiesensor ein Abstandssensor (118) oder ein Winkelsensor ist.

3. Vorrichtung nach Anspruch 1 oder 2, **dadurch gekennzeichnet, dass** die Vorrichtung derart eingerichtet ist, dass sie bei der topographischen Vermessung zwischen einzelnen Messpunkten den Gegenstand um die Drehachse verdreht und den Topographiesensor in der Verfahrebene verfährt, so dass die Messpunkte auf einer spiralförmigen Bahn um die Drehachse herum angeordnet sind, wenn man die Messpunkte auf eine zu der Drehachse senkrechte Ebene projiziert.

4. Vorrichtung nach einem der vorhergehenden Ansprüche, **dadurch gekennzeichnet, dass** durch die Vorwichtung ein halber Diagonalschnitt durch die Oberfläche (12) messbar und die andere Hälfte des Diagonalschnitts durch rechnerische Spiegelung des gemessenen halben Diagonalschnitts an der von dem Autokollimator (134) gemessenen Symmetrieachse ermittelbar ist.

5. Verfahren zur topographischen Vermessung von gekrümmten rotationssymmetrischen Oberflächen (12) von Gegenständen (14), insbesondere von Linsen, bei dem ein Topografiesensor (118) topografische Daten eines Punktes, einer Linie oder eines Flachenelements auf der Oberfläche (12) misst, wobei der Topografiesensor (118) und die Oberfläche relativ zueinander in einer Verfahrebene (124) verfahren werden, wobei die Verfahrebene (124) zu einer Drehachse, um die der Gegenstand gedreht wird, in einem Winkel ungleich 90°, vorzugsweise in einem Winkel kleiner als 80°, angeordnet wird,
**gekennzeichnet durch** folgende Schritte:
a) Messen der Lage der Symmetrieachse der rotationssymmetrischen Oberfläche mit einem Autokollimator oder mit dem Topographiesensor;
b) Messung eines halben Diagonalschnitts **durch** die Oberfläche (12);
c) Berechnen der anderen Hälfte des Diagonalschnitts **durch** rechnerische Spiegelung des in Schritt b) gemessenen halben Diagonalschnitts an der Symmetrieachse.

6. Verfahren nach Anspruch 5, **dadurch gekennzeichnet, dass** die Lage der Symmetrieachse (16) der Oberfläche (12) ermittelt und als Bezugsgröße für die gemessenen topografischen Daten verwendet wird.

## Claims

1. Apparatus for topographical surveying of curved rotationally symmetrical surfaces (12) of objects (14), in particular of lenses, with a topography sensor (118) with which topographical data of a point, of a line or of an elemental area on the surface (12) are measurable, the topography sensor (118) and the surface (12) being traversable relative to one another in a traversing plane (124), and with a rotating device which has been set up to rotate the object about an axis of rotation, and wherein the traversing plane (124) has been arranged relative to the axis of rotation at an angle unequal to 90°, preferentially at an angle less than 80°,
**characterised in that** the apparatus exhibits an autocollimator (134) which has been set up for measuring the position of an axis of symmetry (16) of the rotationally symmetrical surface.

2. Apparatus according to Claim 1, **characterised in that** the topography sensor is a distance sensor (118) or an angle sensor.

3. Apparatus according to Claim 1 or 2, **characterised in that** the apparatus has been set up in such a manner that in the course of the topographical surveying between individual measurement points it twists the object about the axis of rotation and traverses the topography sensor in the traversing plane, so that the measurement points have been arranged on a spiral path around the axis of rotation when the measurement points are projected onto a plane that is perpendicular to the axis of rotation.

4. Apparatus according to one of the preceding claims, **characterised in that** one half diagonal section through the surface (12) is measurable by the apparatus and the other half of the diagonal section is ascertainable by computational mirroring of the measured half diagonal section along the axis of symmetry measured by the autocollimator (134).

5. Process for topographical surveying of curved rotationally symmetrical surfaces (12) of objects (14), in particular of lenses, in the course of which a topography sensor (118) measures topographical data of a point, of a line or of an elemental area on the surface (12), wherein the topography sensor (118) and the surface are traversed relative to one another in a traversing plane (124), wherein the traversing plane (124) is arranged at an angle unequal to 90°, preferentially at an angle less than 80°, relative to an axis of rotation about which the object is rotated,
**characterised by** the following steps:
a) measuring the position of the axis of symmetry of the rotationally symmetrical surface with an autocollimator or with the topography sensor;
b) measuring a half diagonal section through the surface (12);
c) calculating the other half of the diagonal section by computational mirroring of the half diagonal section, measured in step b), along the axis of symmetry.

6. Process according to Claim 5, **characterised in that** the position of the axis of symmetry (16) of the surface (12) is ascertained and is used as reference quantity for the measured topographical data.

## Revendications

1. Dispositif dévolu à la mesure topographique de surfaces (12) d'objets (14) qui sont dotées d'une courbure et d'une symétrie de révolution, en particulier des lentilles, comprenant un capteur topographique (118) au moyen duquel des données topographiques d'un point, d'une ligne ou d'un élément de surface peuvent être mesurées sur la surface (12), ledit capteur topographique (118) et ladite surface (12) pouvant être déplacés l'un par rapport à l'autre dans un plan de déplacement (124) ; et un système de rotation conçu pour faire tourner l'objet autour d'un axe de rotation, ledit plan de déplacement (124) étant agencé pour décrire, avec ledit axe de rotation, un angle différant de 90° et, de préférence, un angle inférieur à 80 °,
**caractérisé par le fait que** ledit dispositif présente
un autocollimateur (134) conçu pour mesurer la position d'un axe de symétrie (16) de la surface à symétrie de révolution.

2. Dispositif selon la revendication 1, **caractérisé par le fait que** le capteur topographique est un capteur (118) de distances, ou un capteur d'angles.

3. Dispositif selon la revendication 1 ou 2, **caractérisé par le fait que** ledit dispositif est conçu de telle sorte que, durant la mesure topographique entre des points individuels de mesure, il imprime une rotation à l'objet autour de l'axe de rotation et déplace le capteur topographique dans le plan de déplacement, si bien que les points de mesure sont disposés sur une trajectoire spiroïdale, tout autour de l'axe de rotation, lorsque lesdits points de mesure sont projetés sur un plan perpendiculaire audit axe de rotation.

4. Dispositif selon l'une des revendications précédentes, **caractérisé par le fait que** ledit dispositif permet de mesurer une demi-coupe diagonale passant par la surface (12), et de déterminer l'autre moitié de la coupe diagonale en reflétant par calcul la demi-coupe diagonale mesurée, sur l'axe de symétrie mesuré par l'autocollimateur (134).

5. Procédé dévolu à la mesure topographique de surfaces (12) d'objets (14) qui sont dotées d'une courbure et d'une symétrie de révolution, en particulier des lentilles, dans lequel un capteur topographique (118) mesure des données topographiques d'un point, d'une ligne ou d'un élément de surface, sur la surface (12), ledit capteur topographique (118) et ladite surface étant déplacés l'un par rapport à l'autre dans un plan de déplacement (124), lequel plan de déplacement (124) est agencé pour décrire un angle différant de 90°, de préférence un angle inférieur à 80 ° par rapport à un axe de rotation autour duquel l'objet est animé d'une rotation,
**caractérisé par** les étapes suivantes :
a) mesure de la position de l'axe de symétrie de la surface à symétrie de révolution, à l'aide d'un autocollimateur ou à l'aide du capteur topographique ;
b) mesure d'une demi-coupe diagonale passant par ladite surface (12) ;
c) calcul de l'autre moitié de la coupe diagonale en reflétant par calcul la demi-coupe diagonale mesurée à l'étape b), sur l'axe de symétrie.

6. Procédé selon la revendication 5, **caractérisé par le fait que** la position de l'axe de symétrie (16) de la surface (12) est déterminée et utilisée, en tant que grandeur de référence, pour les données topographiques mesurées.
